# EUROPEAN PATENT SPECIFICATION

(11) **EP 2 262 335 B1**
(45) Date of publication and mention of the grant of the patent: **19.06.2013**
(21) Application number: 09728477.2
(22) Date of filing: 01.04.2009
(51) Int. Cl.: H04W 72/06, H04W 88/10

(54) **METHOD AND APPARATUS FOR MULTIPLE PROVIDERS SHARING CARRIER FREQUENCY RESOURSE**
VERFAHREN UND VORRICHTUNG FÜR MEHRERE, DIESELBE TRÄGERFREQUENZRESSOURCE NUTZENDE ANBIETER
PROCÉDÉ ET APPAREIL DESTINÉ À DES MULTIPLES FOURNISSEURS PARTAGEANT UNE RESSOURCE DE FRÉQUENCE PORTEUSE

(30) Priority: 01.04.2008 CN 200810103197
(43) Date of publication of application: 15.12.2010
(73) Proprietor: Huawei Technologies Co., Ltd., Longgang District, Shenzhen Guangdong 518129 (CN)
(72) Inventor: GAN, Jiubin, Shenzhen Guangdong 518129 (CN)
(74) Representative: Pfenning, Meinig & Partner GbR
(86) International application number: PCT/CN2009/071135
(87) International publication number: WO 2009/121302

(56) References cited:
- EP-A1- 1 220 557
- WO-A1-2005/057978
- WO-A2-02/069665
- CN-A- 1 917 690
- CN-A- 101 083 825
- CN-A- 101 267 651
- US-A- 5 034 993

## Description

### Field of the Invention

The present invention relates to a mobile communications technology, and in particular to a method and an apparatus for sharing carrier frequency resources among multiple operators.

### Background of the Invention

To reduce the investment and operation costs, when building networks, operators achieve the maximum utilization of funds by resource sharing on the basis of cooperation.

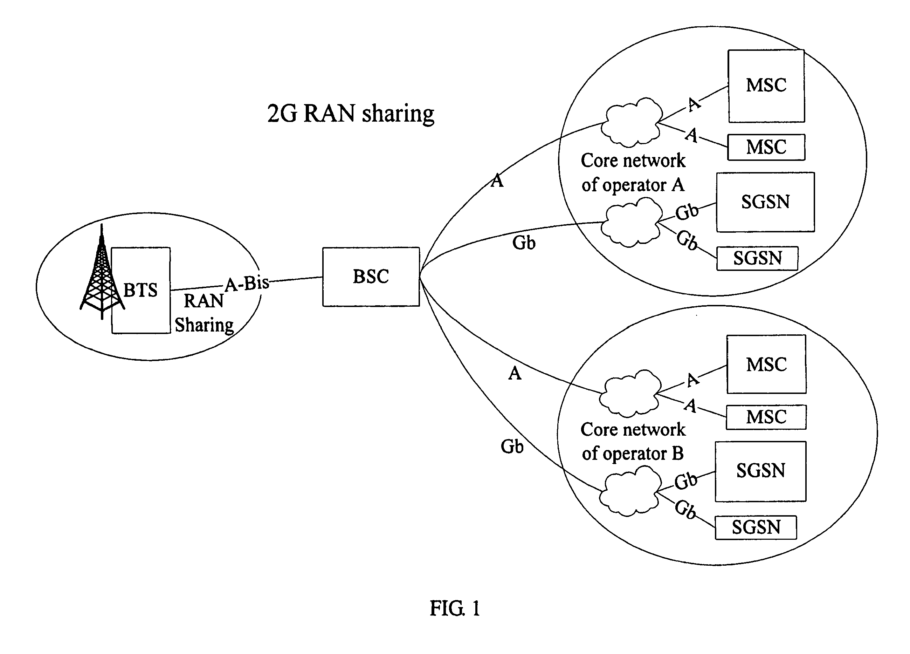

The Radio Access Network (RAN) sharing is one of the ways for resource sharing among operators. Taking the system illustrated in FIG. 1 as an example, in the Global System for Mobile communications (GSM) network, the RAN sharing requires that the same Base Station Controller (BSC) should be connected to the core networks of different operators and support the Base Transceiver Station (BTS) sharing (that is, different operators share the same BTS); each operator may carry out independent management in unit of cell.

In the RAN sharing model, each operator sharing the same access network is allocated an original frequency band without overlapped coverage. For example, operators A to N share the same access network, the frequency band of which is 900 MHz, and the original frequency bands allocated to operators A to N are the frequencies in bands A to N without overlapped coverage in 900 MHz, respectively. During the allocation of carrier frequency resources to the subscribers of operators, the applicable frequencies of the subscribers of each operator are in the range of the original frequency band allocated to the operator; or, the available applicable frequencies of the subscribers of each operator are in the range of the entire frequency band, but the number of the available applicable frequencies does not exceed that of the available frequencies in the original frequency band allocated to the operator.

The prior art has at least the following problems:

On the basis of the present RAN sharing, although the frequency hopping gain on Mobile Allocation (MA, namely, a hopping frequency set) can be improved by the allocation of frequency spectrum resources of each operator, each operator cannot dynamically adjust the frequency spectrum resources among operators, resulting in lower utilization of frequency spectrum resources.

WO 2005/057978 A1 relates to a method and device for managing resources in shared networks. The method and device is based on a few basic comparisons between resources and/or thresholds. If an access request is received (202) and there are not enough resources available (204), the request is rejected (212). If there are resources available (204), there is a check to see if the resource is in a congested state (206). If not, then the connection is accepted (210). If the resource is in a congested state (206), then a test is performed (208) to determine whether or not the resources will be assigned to an operator who has already exceeded the assigned utilisation. If it has, then the connection is rejected (212), otherwise it is accepted (210). Preferred embodiments incorporating priority handling, re-negotiations and soft congestion are easily implemented. In a shared UTRAN, the functionalities for managing the radio baseband allocation for a shared Node B are preferably incorporated in the shared RNC.

### Summary of the Invention

Embodiments of the present invention provide a method and an apparatus for sharing carrier frequency resources among multiple operators so as to adjust frequency spectrum resources dynamically among multiple operators.

The objective of the present invention is realized by the following technical solution:
A method for sharing carrier frequency resources among multiple operators includes:
   when a carrier frequency needs to be allocated to an operator, allocating the carrier frequency to the operator if the number of carrier frequencies occupied by the operator does not reach a predetermined frequency number;
   allocating the carrier frequency to the operator according to a preconfigured policy if the number of carrier frequencies occupied by the operator already reaches the predetermined frequency number; and
   wherein if the number of carrier frequencies occupied by the operator already reaches the predetermined frequency number, the allocating the carrier frequency to the operator according to the preconfigured policy comprises:
   when the number of idle carrier frequencies is increased to exceed a predetermined ascending threshold, allocating an idle carrier frequency to the operator; and
   when the number of idle carrier frequencies is decreased but is not lower than a predetermined descending threshold, allocating an idle carrier frequency to the operator.
An apparatus for sharing carrier frequency resources among multiple operators includes:
   an original frequency number storing module, configured to store frequency number information predetermined for each operator;
   a carrier frequency allocating module, configured to: when a carrier frequency needs to be allocated to an operator, determine whether the number of carrier frequencies occupied by the operator reaches a predetermined frequency number according to the information stored in the original frequency number storing module, and if the number of carrier frequencies does not reach the predetermined frequency number, allocate the carrier frequency to the operator, if the number of carrier frequencies reaches the predetermined frequency number, allocate the carrier frequency to the operator according to a preconfigured policy;
   a threshold monitoring module, configured to: set a descending threshold and an ascending threshold; monitor the number of idle carrier frequencies; send result information indicating that the number of idle carrier frequencies recorded exceeds the ascending threshold to the carrier frequency allocating module, when the number of idle carrier frequencies is increased to exceed the ascending threshold; and send result information indicating that the number of idle carrier frequencies recorded is lower than the descending threshold to the carrier frequency allocating module, when the number of idle carrier frequencies is decreased to be lower than the descending threshold; and
   wherein if it is determined that the number of carrier frequencies occupied by the operator already reaches the predetermined frequency number according to the information stored in the original frequency number storing module, the carrier frequency allocating module is further configured to: determine the number of idle carrier frequencies according to the result information from the threshold monitoring module, and allocate an idle carrier frequency to the operator when the number of idle carrier frequencies is increased to exceed the ascending threshold, and allocate an idle carrier frequency to the operator when the number of idle carrier frequencies is decreased but is not lower than the descending threshold.

As seen from the technical solution above, in the embodiments of the present invention, because the number of carrier frequencies that may be occupied by the operator may exceed the predetermined frequency number, the frequency spectrum resources of operators may be adjusted dynamically. In this way, the utilization of the frequency spectrum resources is improved. Therefore, the investment costs of operators are reduced.

### Brief Description of the Drawings

FIG. 1 is a schematic diagram of a system for RAN sharing in the prior art;
FIG. 2 shows a processing procedure provided in an embodiment of the present invention;
FIG. 3 shows another processing procedure provided in an examplary implementation; and
FIG. 4 shows a structure of an apparatus provided in an embodiment of the present invention.

### Detailed Description of the Embodiments

In the embodiments of the present invention, the number of frequencies is predetermined for each operator that shares network frequency spectrum resources (the sharing model is such as the RAN sharing model). Other frequencies of an operator excluding the frequencies counted in the predetermined number are defined as the additional carrier frequency resources of the operator; and if the number of frequencies occupied by the operator reaches the predetermined frequency number, the additional carrier frequency resources are allocated to the operator. Specifically, when a carrier frequency needs to be allocated to an operator, if the number of carrier frequencies occupied by the operator does not reach the predetermined frequency number, the carrier frequency is allocated to the operator; and if the number of carrier frequencies occupied by the operator already reaches the predetermined frequency number, the carrier frequency is allocated to the operator according to a preconfigured policy.

In the embodiments of the present invention, if the number of carrier frequencies occupied by the operator does not reach the predetermined frequency number, the carrier frequency is allocated to the operator. Specifically, if an idle carrier frequency is available, the idle carrier frequency is allocated to the operator; and if no idle carrier frequency is available (all the available frequencies in the entire frequency band are occupied), a carrier frequency occupied by an operator with the lowest carrier frequency occupation priority is allocated to the operator, where the carrier frequency occupation priority is the carrier frequency occupation priority information of the operator when the number of carrier frequencies occupied by the operator exceeds the predetermined frequency number. That is, the applicable frequencies of the subscribers of the operator are in the range of the available frequencies in the entire frequency band of the network, and the applicable frequency number may exceed the corresponding original frequency number of the operator. In addition, when a carrier frequency pre-emption occurs, if the number of carrier frequencies occupied by the operator does not reach the corresponding original frequency number, the operator has the highest carrier frequency pre-emption priority, and the original frequency number is the predetermined frequency number of the operator. Herein, the carrier frequency occupation priority is a predetermined value that may be specifically determined by the negotiation among operators and configured on the BSC.

The embodiments of the present invention may control the occupation of the additional carrier frequency resources by setting a descending threshold and an ascending threshold, for example, setting a descending threshold X and an ascending threshold Y. When the number of idle carrier frequencies is increased to exceed the ascending threshold Y, the additional carrier frequency resources are allowed to be allocated to an operator; and when the number of idle carrier frequencies is decreased to be lower than the descending threshold X, the additional carrier frequency resources are not allowed to be allocated to an operator. For example, when the number of carrier frequencies occupied by an operator already reaches the predetermined frequency number, if the number of idle carrier frequencies is increased but does not exceed the ascending threshold Y, no carrier frequency is available for the operator; if the number of idle carrier frequencies is increased to exceed the ascending threshold Y, an idle carrier frequency is allocated to the operator; if the number of idle carrier frequencies is decreased to be lower than the descending threshold X, no carrier frequency is available for the operator; and if the number of idle carrier frequencies is decreased but is not lower than the descending threshold X, an idle carrier frequency is allocated to the operator, where X is less than or equal to Y. The descending threshold X and the ascending threshold Y may be manually set in the practical application; or set by a software algorithm according to parameters, such as the frequency that an operator is forced to give up or the call drop rate.

In an example, if the ascending and descending thresholds are not set, the carrier frequency resource allocation policy further includes: when the number of carrier frequencies occupied by the operator already reaches the allocated original frequency number, if an idle carrier frequency is available, the idle carrier frequency is allocated to the operator; if no idle carrier frequency is available, a certain carrier frequency occupied by an operator with the lowest carrier frequency occupation priority is allocated to the operator; and if the operator has the lowest carrier frequency occupation priority, no carrier frequency is available for the operator, and no carrier frequency is allocated to the operator.

Before the carrier frequency occupied by an operator with the lowest carrier frequency occupation priority is allocated to the operator, the embodiments of the present invention further include: searching for all operators occupying frequencies the number of which is greater than the predetermined frequency number, comparing their carrier frequency occupation priorities, and determining an operator with the lowest carrier frequency occupation priority.

In the embodiments of the present invention, when the operator with the lowest carrier frequency occupation priority should release a certain carrier frequency occupied, the way of determining the carrier frequency to be released may include, but be not limited to, specifying any carrier frequency occupied by the operator with the lowest carrier frequency occupation priority; or, according to pre-recorded occupied carrier frequency information, specifying any carrier frequency that is occupied by the operator with the lowest carrier frequency occupation priority after the number of carrier frequencies occupied by the operator exceeds the corresponding original frequency number. Moreover, the way of releasing a certain carrier frequency by an operator may include, but be not limited to, releasing the carrier frequency when the service of a subscriber occupying the channel in the carrier frequency ends; or releasing the carrier frequency when the service traffic of the subscriber occupying the channel in the carrier frequency exceeds a predetermined value; or releasing the carrier frequency when the service duration of the subscriber occupying the channel in the carrier frequency exceeds a predetermined time; or releasing the carrier frequency immediately.

The following describes the embodiments of the present invention and an example in the practical application with reference to the accompanying drawings.

### Embodiment 1

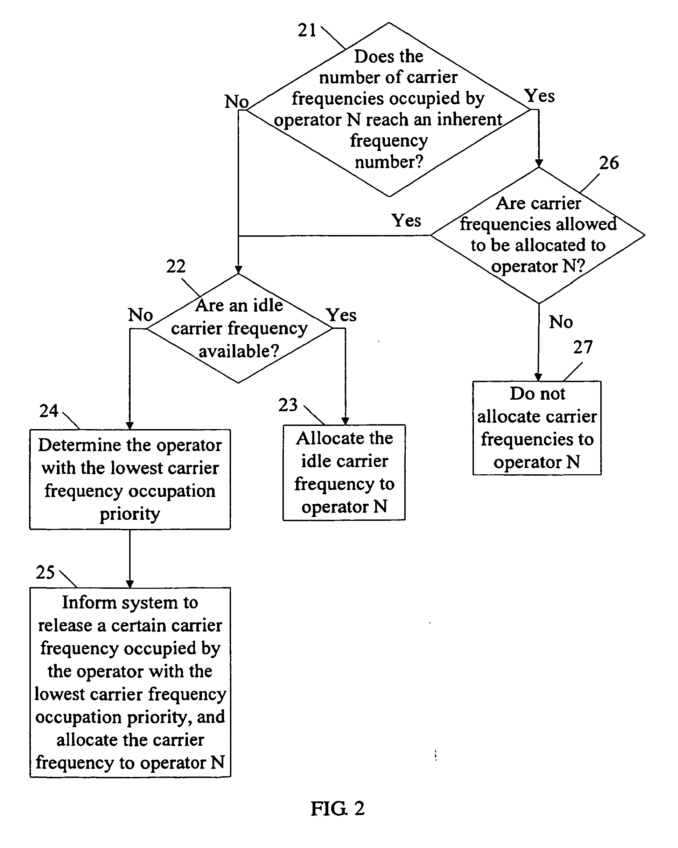

Other frequencies excluding the frequencies counted in original number of operator N (that is, excluding the frequencies counted in the predetermined frequency number of the operator N) are defined as the additional carrier frequency resources of operator N, and, when the frequency number occupied by operator N reaches the original frequency number, the additional carrier frequency resources are allocated to operator N according to the preconfigured policy. Assuming that the descending threshold is X and that the ascending threshold is Y, where X is less than or equal to Y, when the number of idle carrier frequencies is increased to exceed the ascending threshold Y, the additional carrier frequency resources are allowed to be allocated to operator N; and, when the number of remaining idle carrier frequencies is decreased to be lower than the descending threshold is X, the additional carrier frequency resources are not allowed to be allocated to operator N. As illustrated in FIG. 2, the process of allocating carrier frequencies to operator N (subscriber) includes but is not limited to the following steps:
Step 21: Determine whether the number of carrier frequencies occupied by operator N reaches the original frequency number. If the number of carrier frequencies occupied by operator N reaches the original frequency number, execute step 26; if the number of carrier frequencies occupied by operator N does not reach the original frequency number, execute step 22.
Step 22: Determine whether an idle carrier frequency is available. If an idle carrier frequency is available, execute step 23; if no idle carrier frequency is available, execute step 24.
Step 23: Allocate the idle carrier frequency to operator N, and end this carrier frequency allocation operation.
Step 24: Search for all operators occupying frequencies the number of which is greater than the predetermined frequency number, compare their carrier frequency occupation priorities, and determine an operator with the lowest carrier frequency occupation priority, and then execute step 25.
Step 25: Inform the system to release a certain carrier frequency occupied by the operator with the lowest carrier frequency occupation priority, and allocate the carrier frequency to operator N, and end this carrier frequency allocation operation.
Step 26: Determine whether a carrier frequency is allowed to be allocated to operator N. If the carrier frequency is allowed to be allocated to operator N, execute step 22; if the carrier frequency is not allowed to be allocated to operator N, execute step 27.
Step 27: Do not allocate the carrier frequency to operator N because no carrier frequency is available for operator N.

The carrier frequency occupation priority is the priority of an operator for occupying the additional carrier frequency resources. The carrier frequency occupation priority is a predetermined value that may be specifically determined by the negotiation among operators and configured on the BSC.

In step 25, when the operator with the lowest carrier frequency occupation priority should release a certain carrier frequency occupied, the way of determining the carrier frequency to be released may include, but be not limited to, specifying any carrier frequency occupied by the operator with the lowest carrier frequency occupation priority; or, specifying any carrier frequency that is occupied by the operator with the lowest carrier frequency occupation priority and exceeds the corresponding original frequency number, where the information about the carrier frequencies of the operator that exceed the original frequency number may be obtained by recording and monitoring the information about the carrier frequencies occupied by the operator; or selecting a carrier frequency according to a policy formulated by the operator. Moreover, the way of releasing a certain carrier frequency by an operator may specifically include, but be not limited to, releasing the carrier frequency when the service of a subscriber occupying the channel in the carrier frequency ends; or releasing the carrier frequency when the service traffic of the subscriber occupying the channel in the carrier frequency exceeds a predetermined value; or releasing the carrier frequency when the service duration of the subscriber occupying the channel in the carrier frequency exceeds a predetermined time; or releasing the carrier frequency immediately.

In step 26, determining whether the carrier frequency is allowed to be allocated to operator N specifically may be: if the number of remaining idle carrier frequencies is increased to exceed the ascending threshold Y, a carrier frequency is allowed to be allocated to operator N, and an idle carrier frequency is allocated; if the number of remaining idle carrier frequencies is increased but does not exceed the ascending threshold Y, a carrier frequency is not allowed to be allocated to operator N; if the number of remaining idle carrier frequencies is decreased to be lower than the descending threshold X, a carrier frequency is not allowed to be allocated to operator N; and if the number of remaining idle carrier frequencies is decreased but is not lower than the descending threshold X, a carrier frequency is allowed to be allocated to operator N, and an idle carrier frequency is allocated.

In the embodiment, because the number of carrier frequencies that may be occupied by the operator may exceed the predetermined frequency number, the frequency spectrum resources of operators may be adjusted dynamically, the utilization of the frequency spectrum resources is improved, and the investment cost of operators is reduced. In addition, because the allocation of carrier frequency resources is controlled by the set ascending threshold and descending threshold, the controllability of carrier frequency resource allocation is enhanced.

### Embodiment 2

On the basis of Embodiment 1, assuming that the number of available frequencies in the entire frequency band is 1 to 15, operator A, operator B and operator C (hereafter referred to as A, B, and C respectively) share the network frequency spectrum resources, where: the original frequency numbers of A, B and C are 5, 7 and 3 respectively; the carrier frequency occupation priority of A is lower than that of C; and the descending threshold X and the ascending threshold Y are 2 and 3 respectively. Herein, the limit for the carrier frequency occupation priority and thresholds may refer to Embodiment 1.

Because of frequency hopping (on the basis of the entire frequency band), assuming that the allocation of carrier frequencies at a certain time point is as follows: A occupies frequencies 1, 2, 3, 5, 6 and 11, which exceed the original frequency number of A; B occupies frequencies 7 and 9, which do not exceed the original frequency number of B; and C occupies frequencies 8, 12, 13, 14 and 15, which exceed the original frequency number of C.

At this time, if the number of subscribers of B increases, resulting in the increase of frequencies, idle carrier frequencies can be allocated to B, because B occupies two frequencies, which do not exceed the original frequency number of B. In this case, the system first finds idle frequency 4 and allocates this frequency to B.

If B needs more frequencies, the idle carrier frequencies may be allocated to B, because the frequency number occupied by B does not reach the original frequency number, and frequency 10 is found to be idle and allocated to B.

If B needs more frequencies, because the frequency number occupied by B does not reach the original frequency number, but no idle carrier frequency is available, a pre-emption occurs. The specific implementation may be as follows: The system finds that the carrier frequencies occupied by A and C exceed the original frequency numbers of A and C, because the carrier frequency occupation priority of A is lower than that of C, a certain carrier frequency of A is released (selecting any one of the frequencies 1, 2, 3, 5, 6 and 11; or, according to the policy of A, selecting any one of the recorded frequencies exceeding the fifth carrier frequency), and allocated to B.

If B still needs more frequencies, because B does not reach the upper limit of 7 frequencies, the carrier frequencies need to be allocated to B, and because the frequency number occupied by B does not reach the original frequency number, but no idle carrier frequency is available, the pre-emption continues. The specific implementation may be as follows: The system finds that, at this moment, only C occupies the carrier frequencies exceeding the original frequency number, and therefore, a certain carrier frequency of C is released, and allocated to B.

Then the number of subscribers of B and C is decreased, and B and C respectively release a carrier frequency, so that the number of idle carrier frequencies is 2. If A needs to occupy frequencies, A applies for additional carrier frequency resources, because the number of carrier frequencies occupied by A already reaches the original frequency number. A cannot be allocated frequencies temporarily, because the number of idle carrier frequencies is 2, and not greater than 3 that is the ascending threshold Y, resulting in no frequencies available for A.

B and C respectively release 2 carrier frequencies further, so that the number of idle carrier frequencies is 6. At this time, although A already reaches the upper limit of 5 frequencies, the number of idle carrier frequencies is 6, and greater than Y, idle carrier frequencies are allowed to be allocated to A. Up to now, B occupies 3 frequencies and C occupies 1 frequency.

If on the basis of the above 6 idle carrier frequencies, A again applies for 5 frequencies, resulting in only 1 idle carrier frequency. At this time, if A continues to apply for carrier frequencies, the application is an application for additional carrier frequency resources, because the number of carrier frequencies occupied by A already exceeds the original frequency number. A cannot be allocated carrier frequencies any more, because 1 is less than 2 that is the descending threshold X. However, the carrier frequencies occupied by B and C do not exceed the corresponding original frequency numbers, so B and C are not constrained by the thresholds, and may still apply for idle carrier frequencies.

In the embodiment, because the number of carrier frequencies that may be occupied by the operator may exceed the predetermined frequency number, frequency spectrum resources of operators may be adjusted dynamically, the utilization of the frequency spectrum resources is improved, and the investment cost of operators is reduced. In addition, because the allocation of carrier frequency resources is controlled by the set ascending threshold and descending threshold, the controllability of carrier frequency resource allocation is enhanced.

### Example

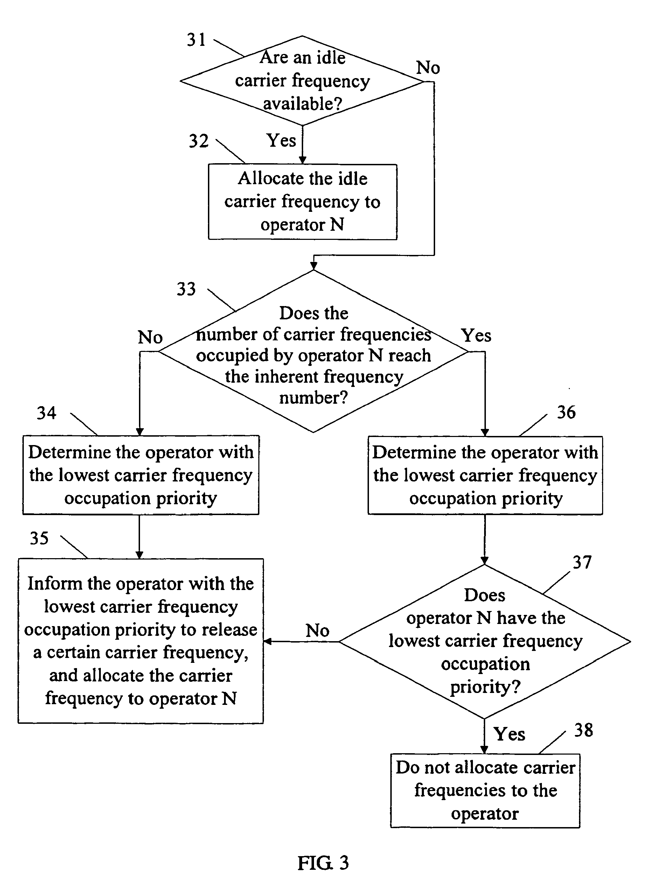

Other frequencies excluding the original frequency number of operator N are defined as the additional carrier frequency resources of operator N, and allocated to operator N, if the frequency number occupied by operator N reaches the original frequency number. No threshold is set in the example. As illustrated in FIG. 3, the process of allocating carrier frequencies to operator N includes the following steps:
Step 31: Determine whether an idle carrier frequency is available. If the idle carrier frequency is available, execute step 32; if no idle carrier frequency is available, execute step 33.
Step 32: Allocate the idle carrier frequency to operator N, and end this carrier frequency allocation operation.
Step 33: Determine whether the number of carrier frequencies occupied by operator N reaches the original frequency number. If the number of carrier frequencies occupied by operator N reaches the original frequency number, execute step 36; if the number of carrier frequencies occupied by operator N does not reach the original frequency number, execute step 34.
Step 34: Search for all operators occupying frequencies the number of which is greater than the predetermined frequency number, compare their carrier frequency occupation priorities, and determine an operator with the lowest carrier frequency occupation priority, and then execute step 35.
Step 35: Inform the operator with the lowest carrier frequency occupation priority to release and allocate a certain carrier frequency to operator N, and end this carrier frequency allocation operation.
Step 36: Search for all operators occupying frequencies the number of which is greater than the predetermined frequency number, compare their carrier frequency occupation priorities, and determine an operator with the lowest carrier frequency occupation priority, and then execute step 37.
Step 37: Determine whether operator N has the lowest carrier frequency occupation priority. If operator N has the lowest carrier frequency occupation priority, execute step 38; if operator N does not have the lowest carrier frequency occupation priority, execute step 35.
Step 38: Do not allocate carrier frequencies to operator N.

The carrier frequency occupation priority is the carrier frequency occupation priority information of the operator when the number of carrier frequencies occupied by the operator exceeds the predetermined frequency number. The carrier frequency occupation priority is a predetermined value that may be specifically determined by the negotiation among operators and configured on the BSC.

In the example, because the number of carrier frequencies that may be occupied by the operator may exceed the predetermined frequency number, the frequency spectrum resources of operators may be adjusted dynamically, the utilization of the frequency spectrum resources is improved, and the investment cost of operators is reduced. In addition, the allocation of carrier frequency resources during the pre-emption is controlled by the set carrier frequency occupation priority, so that the controllability of carrier frequency resource allocation is enhanced, and that the allocation of carrier frequency resources is more rational.

The embodiments of the present invention may be applied in a GSM network. In the RAN sharing model, because, in the GSM network, each operator has a predetermined original frequency band, the original frequency number of the operator is the available frequency number in the corresponding original frequency band. For example, in a GSM900 network, if the original frequency band of operator A is 975 MHz to 999 MHz in which the available frequency number is 24, the original frequency number of operator A is 24.

It can be seen from the description of each embodiment of the present invention above that, in the RAN sharing model, the method provided in the embodiments of the present invention not only improves the hopping gain of a channel, but also realizes the dynamic adjustment of frequency spectrum resources of operators, reduces the investment cost of operators, and provides a new operation model for RAN sharing.

The method for sharing carrier frequency resources among multiple operators may be applied not only in the RAN sharing model in the GSM network, but also in other scenarios, such as 3G and 4G networks, where frequency resources are limited and multiple operators may share a radio frequency spectrum.

All or part of the steps of the method in the embodiments may be completed by hardware instructed by a program. The program may be stored in a computer readable storage medium and execute the steps above. The storage medium includes a Read Only Memory (ROM), a Random Access Memory (RAM), a magnetic disk, or a Compact Disk-Read Only Memory (CD-ROM), which may store program codes.

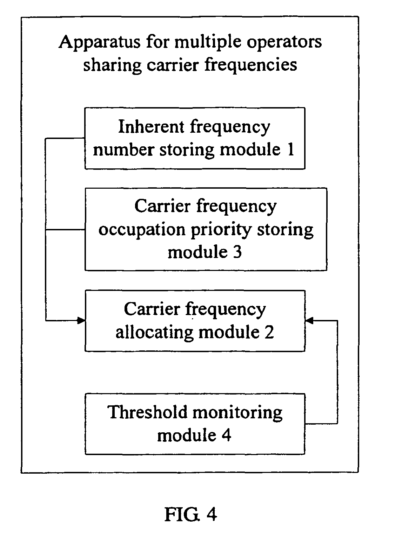

The embodiments of the present invention further provide an apparatus for sharing carrier frequency resources among multiple operators. The structure of the apparatus is illustrated in FIG. 4 and, and the specific structure may include:
an original frequency number storing module 1, configured to store frequency number information predetermined for each operator, for example, information about N frequencies predetermined for operator N; and
a carrier frequency allocating module 2, configured to: when a carrier frequency needs to be allocated to an operator, determine whether the number of carrier frequencies occupied by the operator reaches a predetermined frequency number according to the information stored in the original frequency number storing module, and if the number of carrier frequencies does not reach the predetermined frequency number, allocate the carrier frequency to the operator, if the number of carrier frequencies reaches the predetermined frequency number, allocate the carrier frequency to the operator according to a preconfigured policy.

The apparatus provided in the embodiments of the present invention further includes a carrier frequency occupation priority storing module 3 configured to store the carrier frequency occupation priority of each operator, where the carrier frequency occupation priority is the carrier frequency occupation priority information of the operator when the number of carrier frequencies occupied by the operator exceeds the predetermined frequency number, and the carrier frequency occupation priority information is a predetermined value that may be specifically determined by the negotiation among operators and configured on the BSC.

In the embodiments of the present invention, if it is determined that the number of carrier frequencies occupied by the operator does not reach the predetermined frequency number according to the information stored in the original frequency number storing module 1, the carrier frequency allocating module 2 is specifically configured to: if an idle carrier frequency is available, allocate the idle carrier frequency to the operator; and if no idle carrier frequency is available, allocate to the operator a carrier frequency occupied by an operator with the lowest carrier frequency occupation priority according to the information stored in the carrier frequency occupation priority storing module 3.

To control the occupation of carrier frequency resources, the apparatus provided in the embodiments of the present invention further includes a threshold monitoring module 4, which is configured to: set a descending threshold and an ascending threshold; monitor the number of idle carrier frequencies; send result information indicating that the number of idle carrier frequencies recorded exceeds the ascending threshold to the carrier frequency allocating module 2, when the number of idle carrier frequencies is increased to exceed the ascending threshold; and send result information indicating that the number of idle carrier frequencies recorded is lower than the descending threshold to the carrier frequency allocating module 2, when the number of idle carrier frequencies is decreased to be lower than the descending threshold. Here, the descending threshold is less than or equal to the ascending threshold, and the two thresholds may be manually set in the practical application; or set by a software algorithm according to the parameters, such as the frequency that an operator is forced to give up or the call drop rate.

Correspondingly, the carrier frequency allocating module 2 is further configured to allocate carrier frequencies according to the result information from the threshold monitoring module 4, as detailed below:

If it is determined that the number of carrier frequencies occupied by the operator already reaches the predetermined frequency number according to the information stored in the original frequency number storing module 1, the carrier frequency allocating module 2 is further configured to: according to the result information from the threshold monitoring module 4, when the number of idle carrier frequencies is increased but does not exceed the ascending threshold, determine that no carrier frequency is available for the operator; when the number of idle carrier frequencies is increased to exceed the ascending threshold, allocate an idle carrier frequency to the operator; when the number of idle carrier frequencies is decreased to be lower than the descending threshold, determine that no carrier frequency is available for the operator; and when the number of idle carrier frequencies is decreased but is not lower than the descending threshold, allocate an idle carrier frequency to the operator.

In an example the apparatus does not include the threshold monitoring module 4. In this case, if it is determined that the number of carrier frequencies occupied by the operator reaches the predetermined frequency number according to the information stored in the original frequency number storing module 1, the carrier frequency allocating module 2 is further configured to: according to the information stored in the carrier frequency occupation priority storing module 3, when no idle carrier frequency is available, release and allocate to the operator a certain carrier frequency occupied by an operator with the lowest carrier frequency occupation priority; and if the operator has the lowest carrier frequency occupation priority, determine that no carrier frequency is available for the operator, and not allocate the carrier frequency to the operator.

To determine the operator with the lowest carrier frequency occupation priority, the carrier frequency allocating module 2 is further configured to: according to the information stored in the original frequency number storing module 1, search for all operators occupying frequencies the number of which is greater than the predetermined frequency number, and determine an operator with the lowest carrier frequency occupation priority according to the information stored in the carrier frequency occupation priority storing module 3.

Although the invention has been described through some exemplary embodiments, the invention is not limited to such embodiments. It is apparent that those skilled in the art can make various modifications and variations thereto without departing from the scope of the present invention. The invention is intended to cover the modifications and variations provided that they fall within the scope of protection defined by the claims.

## Claims

1. A method for sharing carrier frequency resources among multiple operators, comprising:
when a carrier frequency needs to be allocated to an operator, allocating the carrier frequency to the operator if the number of carrier frequencies occupied by the operator does not reach a predetermined frequency number; and, allocating the carrier frequency to the operator according to a preconfigured policy if the number of carrier frequencies occupied by the operator already reaches the predetermined frequency number;
**characterized in that** if the number of carrier frequencies occupied by the operator already reaches the predetermined frequency number, the allocating the carrier frequency to the operator according to the preconfigured policy comprises:
when the number of idle carrier frequencies is increased to exceed a predetermined ascending threshold, allocating an idle carrier frequency to the operator; and
when the number of idle carrier frequencies is decreased but is not lower than a predetermined descending threshold, allocating an idle carrier frequency to the operator.

2. The method according to claim 1, wherein if the number of carrier frequencies occupied by the operator does not reach the predetermined frequency number, the allocating the carrier frequency to the operator comprises:
if an idle carrier frequency is available, allocating the idle carrier frequency to the operator; and
if no idle carrier frequency is available, allocating to the operator a carrier frequency occupied by an operator with a lowest carrier frequency occupation priority, wherein the carrier frequency occupation priority is the carrier frequency occupation priority information of the operator when the number of carrier frequencies occupied by the operator exceeds the predetermined frequency number.

3. The method according to claim 1, wherein
when the number of idle carrier frequencies is increased but does not exceed a predetermined ascending threshold, allocating no carrier frequency to the operator;
when the number of idle carrier frequencies is decreased to be lower than a predetermined descending threshold, allocating no carrier frequency to the operator.

4. The method according to claim 1, wherein if the number of carrier frequencies occupied by the operator already reaches the predetermined frequency number, the allocating the carrier frequency to the operator according to the preconfigured policy further comprises:
if no idle carrier frequency is available, allocating to the operator a carrier frequency occupied by an operator with a lowest carrier frequency occupation priority; and if the operator has the lowest carrier frequency occupation priority, not allocating carrier frequencies to the operator, wherein the carrier frequency occupation priority is the carrier frequency occupation priority information of the operator when the number of carrier frequencies occupied by the operator exceeds the predetermined frequency number.

5. The method according to claim 2 or 4, before the allocating to the operator a carrier frequency occupied by an operator with the lowest carrier frequency occupation priority, the method further comprises:
searching for all operators occupying frequencies the number of which is greater than the predetermined frequency number, comparing their carrier frequency occupation priorities, and determining an operator with the lowest carrier frequency occupation priority.

6. The method according to claim 2 or 4, before the allocating to the operator a carrier frequency occupied by an operator with the lowest carrier frequency occupation priority, the method further comprises:
releasing the carrier frequency occupied by an operator with the lowest carrier frequency occupation priority;
wherein the releasing the carrier frequency comprises:
releasing the carrier frequency when the service of a subscriber occupying the channel in the carrier frequency ends; or
releasing the carrier frequency when the service traffic of the subscriber occupying the channel in the carrier frequency exceeds a predetermined value; or
releasing the carrier frequency when the service duration of the subscriber occupying the channel in the carrier frequency exceeds a predetermined time; or
releasing the carrier frequency immediately.

7. The method according to claim 6, wherein determining the carrier frequency to be released comprises:
specifying any carrier frequency occupied by the operator with the lowest carrier frequency occupation priority; or
specifying any carrier frequency that is occupied by the operator with the lowest carrier frequency occupation priority after the number of carrier frequencies occupied by the operator exceeds the corresponding original frequency number according to pre-recorded occupied carrier frequency information.

8. An apparatus for sharing carrier frequency resources among multiple operators, comprising:
an original frequency number storing module (1), configured to store frequency number information predetermined for each operator; and
a carrier frequency allocating module (2), configured to: when a carrier frequency needs to be allocated to an operator, determine whether the number of carrier frequencies occupied by the operator reaches a predetermined frequency number according to the information stored in the original frequency number storing module (1), and if the number of carrier frequencies does not reach the predetermined frequency number, allocate the carrier frequency to the operator, if the number of carrier frequencies reaches the predetermined frequency number, allocate the carrier frequency to the operator according to a preconfigured policy;
**characterized in that** the apparatus further comprises:
a threshold monitoring module (4), configured to: set a descending threshold and an ascending threshold; monitor the number of idle carrier frequencies; send result information indicating that the number of idle carrier frequencies recorded exceeds the ascending threshold to the carrier frequency allocating module (2), when the number of idle carrier frequencies is increased to exceed the ascending threshold; and send result information indicating that the number of idle carrier frequencies recorded is lower than the descending threshold to the carrier frequency allocating module (2), when the number of idle carrier frequencies is decreased to be lower than the descending threshold;
wherein if it is determined that the number of carrier frequencies occupied by the operator already reaches the predetermined frequency number according to the information stored in the original frequency number storing module, the carrier frequency allocating module (2) is further configured to: determine the number of idle carrier frequencies according to the result information from the threshold monitoring module (4), and allocate an idle carrier frequency to the operator when the number of idle carrier frequencies is increased to exceed the ascending threshold, and allocate an idle carrier frequency to the operator when the number of idle carrier frequencies is decreased but is not lower than the descending threshold.

9. The apparatus according to claim 8, further comprising:
a carrier frequency occupation priority storing module (3), configured to store a carrier frequency occupation priority of each operator, wherein the carrier frequency occupation priority is the carrier frequency occupation priority information of an operator when the number of carrier frequencies occupied by the operator exceeds the predetermined frequency number.

10. The apparatus according to claim 9, wherein if it is determined that the number of carrier frequencies occupied by the operator does not reach the predetermined frequency number according to the information stored in the original frequency number storing module (1), the carrier frequency allocating module (2) is configured to: if an idle carrier frequency is available, allocate the idle carrier frequency to the operator; and if no idle carrier frequency is available, allocate to the operator a carrier frequency occupied by an operator with a lowest carrier frequency occupation priority according to the information stored in the carrier frequency occupation priority storing module (3).

11. The apparatus according to claim 10, wherein:
the carrier frequency allocating module (2) is further configured to: search for all operators occupying frequencies the number of which is greater than the predetermined frequency number according to the information stored in the original frequency number storing module (1), and determine the operator with the lowest carrier frequency occupation priority according to the information stored in the carrier frequency occupation priority storing module (3).

## Patentansprüche

1. Verfahren zum gemeinsamen Nutzen von Trägerfrequenz-Betriebsmitteln unter mehreren Operatoren, das Folgendes umfasst:
wenn eine Trägerfrequenz einem Operator zugewiesen werden soll, Zuweisen der Trägerfrequenz zu dem Operator, falls die Anzahl von Trägerfrequenzen, die von dem Operator belegt sind, eine vorgegebene Frequenzanzahl nicht erreicht; und
Zuweisen der Trägerfrequenz zu dem Operator in Übereinstimmung mit einer im Voraus konfigurierten Strategie, falls die Anzahl von Trägerfrequenzen, die der Operator belegt, bereits die vorgegebene Frequenzanzahl erreicht;
**dadurch gekennzeichnet, dass** dann, wenn die Anzahl von Trägerfrequenzen, die von dem Operator belegt sind, bereits die vorgegebene Frequenzanzahl erreicht, das Zuweisen der Trägerfrequenz zu dem Operator in Übereinstimmung mit der im Voraus konfigurierten Strategie Folgendes umfasst:
wenn die Anzahl leerer Trägerfrequenzen zunimmt, um einen vorgegebenen Zunahmeschwellenwert zu überschreiten, Zuweisen einer leeren Trägerfrequenz zu dem Operator; und
wenn die Anzahl leerer Trägerfrequenzen abnimmt, jedoch nicht niedriger als ein vorgegebener Abnahmeschwellenwert ist, Zuweisen einer leeren Trägerfrequenz zu dem Operator.

2. Verfahren nach Anspruch 1, wobei dann, wenn die Anzahl von Trägerfrequenzen, die von dem Operator belegt werden, die vorgegebene Frequenzanzahl nicht erreicht, das Zuweisen der Trägerfrequenz zu dem Operator Folgendes umfasst:
falls eine leere Trägerfrequenz verfügbar ist, Zuweisen der leeren Trägerfrequenz zu dem Operator; und
falls keine leere Trägerfrequenz verfügbar ist, Zuweisen zu dem Operator einer Trägerfrequenz, die von einem Operator mit einer niedrigsten Trägerfrequenzbelegungspriorität belegt wird, wobei die Trägerfrequenzbelegungspriorität die Trägerfrequenzbelegungsprioritäts-Informationen des Operators bildet, wenn die Anzahl von Trägerfrequenzen, die von dem Operator belegt werden, die vorgegebene Frequenzanzahl übersteigt.

3. Verfahren nach Anspruch 1, wobei
dann, wenn die Anzahl leerer Trägerfrequenzen zunimmt, jedoch einen vorgegebenen Zunahmeschwellenwert nicht übersteigt, keine Trägerfrequenz zu dem Operator zugewiesen wird;
dann, wenn die Anzahl leerer Trägerfrequenzen abnimmt, so dass sie niedriger als ein vorgegebener Abnahmeschwellenwert ist, keine Trägerfrequenz zu dem Operator zugewiesen wird.

4. Verfahren nach Anspruch 1, wobei das Zuweisen der Trägerfrequenz zu dem Operator in Übereinstimmung mit der im Voraus konfigurierten Strategie dann, wenn die Anzahl der von dem Operator belegten Trägerfrequenzen bereits die vorgegebene Frequenzanzahl erreicht, ferner Folgendes umfasst:
falls keine leere Trägerfrequenz verfügbar ist, Zuweisen zu dem Operator einer Trägerfrequenz, die von einem Operator mit der geringsten Trägerfrequenzbelegungspriorität belegt wird; und falls der Operator die niedrigste Trägerfrequenzbelegungspriorität hat, Nichtzuweisen von Trägerfrequenzen zu dem Operator, wobei die Trägerfrequenzbelegungspriorität die Trägerfrequenzbelegungspriorität-Informationen des Operators bildet, wenn die Anzahl von Trägerfrequenzen, die von dem Operator belegt werden, die vorgegebene Frequenzanzahl übersteigt.

5. Verfahren nach Anspruch 2 oder 4, wobei das Verfahren vor dem Zuweisen zu dem Operator einer Trägerfrequenz, die von einem Operator mit der niedrigsten Trägerfrequenzbelegungspriorität belegt wird, ferner Folgendes umfasst:
Suchen aller Operatoren, die Frequenzen belegen, deren Anzahl größer als die vorgegebene Frequenzanzahl ist, Vergleichen ihrer Trägerfrequenzbelegungsprioritäten und Bestimmen eines Operators mit der niedrigsten Trägerfrequenzbelegungspriorität.

6. Verfahren nach Anspruch 2 oder 4, wobei das Verfahren vor dem Zuweisen zu dem Operator einer Trägerfrequenz, die von einem Operator mit der niedrigsten Trägerfrequenzbelegungspriorität belegt wird, ferner Folgendes umfasst:
Freigeben der von einem Operator mit der niedrigsten Trägerfrequenzbelegungspriorität belegten Trägerfrequenz;
wobei das Freigeben der Trägerfrequenz Folgendes umfasst:
Freigeben der Trägerfrequenz, wenn der Dienst eines Teilnehmers, der den Kanal in der Trägerfrequenz belegt, endet; oder
Freigeben der Trägerfrequenz, wenn der Dienstverkehr des Teilnehmers, der den Kanal in der Trägerfrequenz belegt, einen vorgegebenen Wert übersteigt; oder
Freigeben der Trägerfrequenz, wenn die Dienstdauer des Teilnehmers, der den Kanal in der Trägerfrequenz belegt, eine vorgegebene Zeit übersteigt; oder
sofortiges Freigeben der Trägerfrequenz.

7. Verfahren nach Anspruch 6, wobei das Bestimmen der freizugebenden Trägerfrequenz Folgendes umfasst:
Spezifizieren irgendeiner Trägerfrequenz, die von dem Operator mit der niedrigsten Trägerfrequenzbelegungspriorität belegt wird; oder
Spezifizieren irgendeiner Trägerfrequenz, die von dem Operator mit der niedrigsten Trägerfrequenzbelegungspriorität belegt wird, nachdem die Anzahl von Trägerfrequenzen, die von dem Operator belegt werden, die entsprechende ursprüngliche Frequenzanzahl übersteigt, in Übereinstimmung mit im Voraus aufgezeichneten Informationen über belegte Trägerfrequenzen.

8. Vorrichtung zum gemeinsamen Nutzen von Trägerfrequenz-Betriebsmitteln unter mehreren Operatoren, die Folgendes umfasst:
ein Modul (1) zum Speichern einer ursprünglichen Frequenzanzahl, das konfiguriert ist, Frequenzanzahlinformationen, die für jeden Operator vorgegeben sind, zu speichern; und
ein Trägerfrequenz-Zuweisungsmodul (2), das konfiguriert ist: dann, wenn eine Trägerfrequenz einem Operator zugewiesen werden soll, in Übereinstimmung mit den Informationen, die in dem Modul (1) zum Speichern einer ursprünglichen Frequenzanzahl gespeichert sind, zu bestimmen, ob die Anzahl von Trägerfrequenzen, die von dem Operator belegt werden, eine vorgegebene Frequenzanzahl erreicht, und dann, wenn die Anzahl von Trägerfrequenzen die vorgegebene Frequenzanzahl nicht erreicht, die Trägerfrequenz dem Operator zuzuweisen, und dann, wenn die Anzahl von Trägerfrequenzen die vorgegebene Frequenzanzahl erreicht, die Trägerfrequenz dem Operator in Übereinstimmung mit einer im Voraus konfigurierten Strategie zuzuweisen;
**dadurch gekennzeichnet, dass** die Vorrichtung ferner Folgendes umfasst:
ein Schwellenwertüberwachungsmodul (4), das konfiguriert ist: einen Abnahmeschwellenwert und einen Zunahmeschwellenwert einzustellen; die Anzahl leerer Trägerfrequenzen zu überwachen; Ergebnisinformationen, die angeben, dass die Anzahl aufgezeichneter leerer Trägerfrequenzen den Zunahmeschwellenwert übersteigt, zu dem Trägerfrequenz-Zuweisungsmodul (2) zu senden, wenn die Anzahl leerer Trägerfrequenzen zunimmt, um den Zunahmeschwellenwert zu übersteigen; und Ergebnisinformationen, die angeben, dass die Anzahl aufgezeichneter leerer Trägerfrequenzen niedriger als der Abnahmeschwellenwert ist, zu dem Trägerfrequenz-Zuweisungsmodul (2) zu senden, wenn die Anzahl leerer Trägerfrequenzen abnimmt, so dass sie niedriger als der Abnahmeschwellenwert ist;
wobei dann, wenn in Übereinstimmung mit dem in dem Modul zum Speichern der ursprünglichen Frequenzanzahl gespeicherten Informationen bestimmt wird, dass die Anzahl von Trägerfrequenzen, die von dem Operator belegt werden, bereits die vorgegebene Frequenzanzahl erreicht hat, das Trägerfrequenz-Zuweisungsmodul (2) ferner konfiguriert ist: die Anzahl leerer Trägerfrequenzen in Übereinstimmung mit den Ergebnisinformationen von dem Schwellenwertüberwachungsmodul (4) zu bestimmen und dem Operator eine leere Trägerfrequenz zuzuweisen, wenn die Anzahl der leeren Trägerfrequenzen zugenommen hat, so dass sie den Zunahmeschwellenwert übersteigt, und eine leere Trägerfrequenz dem Operator zuzuweisen, wenn die Anzahl leerer Trägerfrequenzen abgenommen hat, jedoch nicht niedriger als der Abnahmeschwellenwert ist.

9. Vorrichtung nach Anspruch 8, die ferner Folgendes umfasst:
ein Trägerfrequenzbelegungspriorität-Speichermodul (3), das konfiguriert ist, eine Trägerfrequenzbelegungspriorität jedes Operators zu speichern, wobei die Trägerfrequenzbelegungspriorität die Trägerfrequenzbelegungspriorität-Information eines Operators ist, wenn die Anzahl von Trägerfrequenzen, die von dem Operator belegt werden, die vorgegebene Frequenzanzahl übersteigt.

10. Vorrichtung nach Anspruch 9, wobei dann, wenn in Übereinstimmung mit den Informationen, die in dem Modul (1) zum Speichern der ursprünglichen Frequenzanzahl gespeichert sind, bestimmt wird, dass die Anzahl von Trägerfrequenzen, die von dem Operator belegt werden, die vorgegebene Frequenzanzahl nicht erreicht, das Trägerfrequenz-Zuweisungsmodul (2) konfiguriert ist: dann, wenn eine leere Trägerfrequenz verfügbar ist, die leere Trägerfrequenz dem Operator zuzuweisen; und dann, wenn keine leere Trägerfrequenz verfügbar ist, in Übereinstimmung mit den Informationen, die in dem Trägerfrequenzbelegungsprioritäts-Speichermodul (3) gespeichert sind, dem Operator eine Trägerfrequenz zuzuweisen, die von einem Operator mit der niedrigsten Trägerfrequenzbelegungspriorität belegt wird.

11. Vorrichtung nach Anspruch 10, wobei:
das Trägerfrequenz-Zuweisungsmodul (2) ferner konfiguriert ist: in Übereinstimmung mit den Informationen, die in dem Modul (1) zum Speichern der ursprünglichen Frequenzanzahl gespeichert sind, sämtliche Operatoren zu suchen, die Frequenzen belegen, deren Anzahl größer als die vorgegebene Frequenzanzahl ist,
und in Übereinstimmung mit den Informationen, die in dem Trägerfrequenzbelegungspriorität-Speichermodul (3) gespeichert sind, den Operator mit der niedrigsten Trägerfrequenzbelegungspriorität zu bestimmen.

## Revendications

1. Procédé permettant de partager des ressources de fréquence porteuse parmi plusieurs opérateurs, comprenant les étapes suivantes :
lorsqu'une fréquence porteuse doit être attribuée à un opérateur, attribuer la fréquence porteuse à l'opérateur si le nombre de fréquences porteuses occupées par l'opérateur n'atteint pas un nombre de fréquences prédéterminé ; et, attribuer la fréquence porteuse à l'opérateur selon une politique préconfigurée si le nombre de fréquences porteuses occupées par l'opérateur atteint déjà le nombre de fréquences prédéterminé ;
**caractérisé en ce que** si le nombre de fréquences porteuses occupées par l'opérateur atteint déjà le nombre de fréquences prédéterminé, l'étape consistant à attribuer la fréquence porteuse à l'opérateur selon la politique préconfigurée comprend :
lorsque le nombre de fréquences porteuses inactives est augmenté pour excéder un seuil supérieur prédéterminé, attribuer une fréquence porteuse inactive à l' opérateur ; et
lorsque le nombre de fréquences porteuses inactives est diminué, mais n'est pas au-dessous d'un seuil inférieur prédéterminé, attribuer une fréquence porteuse inactive à l'opérateur.

2. Procédé selon la revendication 1, dans lequel si le nombre de fréquences porteuses occupées par l'opérateur n'atteint pas le nombre de fréquences prédéterminé, l'étape consistant à attribuer la fréquence porteuse à l'opérateur comprend :
si une fréquence porteuse inactive est disponible, attribuer la fréquence porteuse inactive à l'opérateur ; et
si aucune fréquence porteuse inactive n'est disponible, attribuer à l'opérateur une fréquence porteuse occupée par un opérateur comportant une priorité d'occupation de fréquence porteuse moins élevée, la priorité d'occupation de fréquence porteuse correspondant aux informations de priorité d'occupation de fréquence porteuse de l'opérateur lorsque le nombre de fréquences porteuses occupées par l'opérateur excède le nombre de fréquences prédéterminé.

3. Procédé selon la revendication 1, dans lequel :
lorsque le nombre de fréquences porteuses inactives est augmenté mais n'excède pas un seuil supérieur prédéterminé, ne pas attribuer de fréquence porteuse à l'opérateur ;
lorsque le nombre de fréquences porteuses inactives est diminué pour se trouver au-dessous d'un seuil inférieur prédéterminé, ne pas attribuer de fréquence porteuse à l'opérateur.

4. Procédé selon la revendication 1, dans lequel si le nombre de fréquences porteuses occupées par l'opérateur atteint déjà le nombre de fréquences prédéterminé, l'étape consistant à attribuer la fréquence porteuse à l'opérateur selon la politique préconfigurée comprend en outre :
si aucune fréquence porteuse inactive n'est disponible, attribuer à l'opérateur une fréquence porteuse occupée par un opérateur comportant une priorité d'occupation de fréquence porteuse moins élevée ; et si l'opérateur a la priorité d'occupation de fréquence porteuse moins élevée, ne pas attribuer de fréquences porteuses à l'opérateur, la priorité d'occupation de fréquence porteuse correspondant aux informations de priorité d'occupation de fréquence porteuse de l'opérateur lorsque le nombre de fréquences porteuses occupées par l'opérateur excède le nombre de fréquences prédéterminé.

5. Procédé selon la revendication 2 ou 4, comprenant en outre avant l'étape consistant à attribuer à l'opérateur une fréquence porteuse occupée par un opérateur comportant la priorité d'occupation de fréquence porteuse moins élevée :
rechercher tous les opérateurs occupant des fréquences dont le nombre est supérieur au nombre de fréquences prédéterminé, comparer leurs priorités d'occupation de fréquence porteuse, et déterminer un opérateur comportant la priorité d'occupation de fréquence porteuse moins élevée.

6. Procédé selon la revendication 2 ou 4, comprenant en outre avant l'étape consistant à attribuer à l'opérateur une fréquence porteuse occupée par un opérateur comportant la priorité d'occupation de fréquence porteuse moins élevée :
libérer la fréquence porteuse occupée par un opérateur comportant la priorité d'occupation de fréquence porteuse moins élevée ;
l'étape consistant à libérer la fréquence porteuse comprenant :
libérer la fréquence porteuse lorsque le service d'un abonné occupant le canal dans la fréquence porteuse se termine ; ou
libérer la fréquence porteuse lorsque le trafic de service de l'abonné occupant le canal dans la fréquence porteuse excède une valeur prédéterminée ; ou
libérer la fréquence porteuse lorsque la durée de service de l'abonné occupant le canal dans la fréquence porteuse excède un temps prédéterminé ; ou
libérer la fréquence porteuse immédiatement.

7. Procédé selon la revendication 6, dans lequel l'étape consistant à déterminer la fréquence porteuse à libérer comprend :
spécifier une fréquence porteuse occupée par l'opérateur comportant la priorité d'occupation de fréquence porteuse moins élevée ; ou
spécifier une fréquence porteuse qui est occupée par l'opérateur comportant la priorité d'occupation de fréquence porteuse moins élevée après que le nombre de fréquences porteuses occupées par l'opérateur excède le nombre de fréquences original correspondant selon des informations de fréquence porteuse occupée préenregistrées.

8. Appareil permettant de partager des ressources de fréquence porteuse parmi plusieurs opérateurs, comprenant :
un module de stockage de nombre de fréquences original (1), configuré pour stocker des informations de nombre de fréquences prédéterminées pour chaque opérateur ; et
un module d'attribution de fréquence porteuse (2), configuré pour : lorsqu'une fréquence porteuse doit être attribuée à un opérateur, déterminer si le nombre de fréquences porteuses occupées par l'opérateur atteint un nombre de fréquences prédéterminé selon les informations stockées dans le module de stockage de nombre de fréquences original (1), et si le nombre de fréquences porteuses n'atteint pas le nombre de fréquences prédéterminé, attribuer la fréquence porteuse à l'opérateur, si le nombre de fréquences porteuses atteint le nombre de fréquences prédéterminé, attribuer la fréquence porteuse à l'opérateur selon une politique préconfigurée ;
**caractérisé en ce que** l'appareil comprend en outre :
un module de contrôle de seuil (4), configuré pour : définir un seuil inférieur et un seuil supérieur ; contrôler le nombre de fréquences porteuses inactives ; envoyer des informations de résultat indiquant que le nombre de fréquences porteuses inactives enregistrées excède le seuil supérieur au module d'attribution de fréquence porteuse (2), lorsque le nombre de fréquences porteuses inactives est augmenté pour excéder le seuil supérieur ; et envoyer des informations de résultat indiquant que le nombre de fréquences porteuses inactives enregistrées est au-dessous du seuil inférieur au module d'attribution de fréquence porteuse (2), lorsque le nombre de fréquences porteuses inactives est diminué pour être au-dessous du seuil inférieur ;
s'il est déterminé que le nombre de fréquences porteuses occupées par l'opérateur atteint déjà le nombre de fréquences prédéterminé selon les informations stockées dans le module de stockage de nombre de fréquences original, le module d'attribution de fréquence porteuse (2) étant en outre configuré pour : déterminer le nombre de fréquences porteuses inactives selon les informations de résultat obtenues à partir du module de contrôle de seuil (4), et attribuer une fréquence porteuse inactive à l'opérateur lorsque le nombre de fréquences porteuses inactives est augmenté pour excéder le seuil supérieur, et attribuer une fréquence porteuse inactive à l'opérateur lorsque le nombre de fréquences porteuses inactives est diminué mais n'est pas au-dessous du seuil inférieur.

9. Appareil selon la revendication 8, comprenant en outre :
un module de stockage de priorité d'occupation de fréquence porteuse (3), configuré pour stocker une priorité d'occupation de fréquence porteuse de chaque opérateur, la priorité d'occupation de fréquence porteuse correspondant aux informations de priorité d'occupation de fréquence porteuse d'un opérateur lorsque le nombre de fréquences porteuses occupées par l'opérateur excède le nombre de fréquences prédéterminé.

10. Appareil selon la revendication 9, dans lequel s'il est déterminé que le nombre de fréquences porteuses occupées par l'opérateur n'atteint pas le nombre de fréquences prédéterminé selon les informations stockées dans le module de stockage de nombre de fréquences original (1), le module d'attribution de fréquence porteuse (2) est configuré pour : si une fréquence porteuse inactive est disponible, attribuer la fréquence porteuse inactive à l'opérateur ; et si aucune fréquence porteuse inactive n'est disponible, attribuer à l'opérateur une fréquence porteuse occupée par un opérateur comportant une priorité d'occupation de fréquence porteuse moins élevée selon les informations stockées dans le module de stockage de priorité d'occupation de fréquence porteuse (3).

11. Appareil selon la revendication 10, dans lequel :
le module d'attribution de fréquence porteuse (2) est en outre configuré pour :
rechercher tous les opérateurs occupant des fréquences dont le nombre est supérieur au nombre de fréquences prédéterminé selon les informations stockées dans le module de stockage de nombre de fréquences original (1), et déterminer l'opérateur avec la priorité d'occupation de fréquence porteuse moins élevée selon les informations stockées dans le module de stockage de priorité d'occupation de fréquence porteuse (3).
